# EUROPEAN PATENT APPLICATION

(11) **EP 2 006 196 A1**
(43) Date of publication of application: **24.12.2008**
(21) Application number: 08010960.6
(22) Date of filing: 17.06.2008
(51) Int. Cl.: B62J 15/02, B62J 15/04

(54) **Safety release for fender**

(30) Priority: 21.06.2007 IT VI20070179
(71) Applicant: Passuello, Ivan, 31020 San Zenone Degli Ezzelini TV (IT)
(72) Inventor: Passuello, Ivan, 31020 San Zenone Degli Ezzelini TV (IT)
(74) Representative: Forattini, Amelia

(57) **Abstract**

A safety release (1) for a fender, including an engagement member (100) which can be associated slidingly with a fender (2), by virtue of a guide (101) with a transverse cross-section which is substantially complementary to the transverse cross-section of the fender (2), and can be associated by interlocking with a single rod (3,4a,4b). The safety release (1) includes a means for fixing by mechanical interference which is suitable to stop the sliding of the engagement member (100) with respect to the fender (2) and to join detachably the engagement member (100) to a mudflap profile (200) to form a single body, as a consequence of the deformation of the single rod (3,4a,4b).

## Description

The present invention relates to a safety release for a fender, particularly suitable for use of single rods.

As is known, in order to install fenders on cycles, various types of support and engagement device are commonly used which can be applied to appropriately provided supporting rods which are joined to the frame and are shaped so as to be able to clamp the fenders.

In addition to the usual clips conceived for the use of single supporting rods, there are other types of engagement device which are specific for single rods, i.e., for supporting rods which are substantially U-shaped and which sorround the fender with their curved head and are joined to the frame at their free ends.

Italian Patent Application No. VI2006A000021 discloses an engagement device for a single rod which can be slidingly associated and locked to a fender and supports the single rod by interlocking.

Although such device achieves its tasks adequately, solving many of the problems of the prior art, it has drawbacks linked mainly to the manner in which its sliding with respect to the fender is locked.

The choice to be able to engage detachably the locking device by virtue of a snap movement forces the provision, on the device, of teeth and protrusions of various shapes, with consequent repercussions on the cost of the molds, and to provide notches and slots on the fender, which considerably increase production costs and times.

The aim of this invention is to solve the problems described above by providing a safety release for fender which can be installed on any type of fender and especially without performing any preliminary work.

Within the scope of this aim, a particular object of the invention is to provide a safety release for a fender which combines with its main function also the function of a mudflap.

Another object of the invention is to provide a safety release for a fender which ensures maximum safety for the user even in case of an accident.

Another object of the invention is to provide a safety release for a fender which is simple to manufacture and quick to install and is particularly advantageous from a purely economic standpoint.

The above aim, as well as the mentioned objects and others which will become better apparent hereinafter, are achieved by a safety release for a fender, comprising an engagement member which can be slidingly associated with a fender and can be associated by interlocking with a single rod, said engagement member comprising a guide with a transverse cross-section which is substantially complementary to the transverse cross-section of said fender, characterized in that it comprises a mechanical interference locking means which is suitable to stop the sliding of said engagement member with respect to said fender and to detachably join said engagement member to a mudflap profile to form a single body, as a consequence of the deformation of said single rod.

Further characteristics and advantages will become better apparent from the description of a preferred but not exclusive embodiment of a safety release for a fender according to the invention, illustrated by way of non-limiting example in the accompanying drawings, wherein:

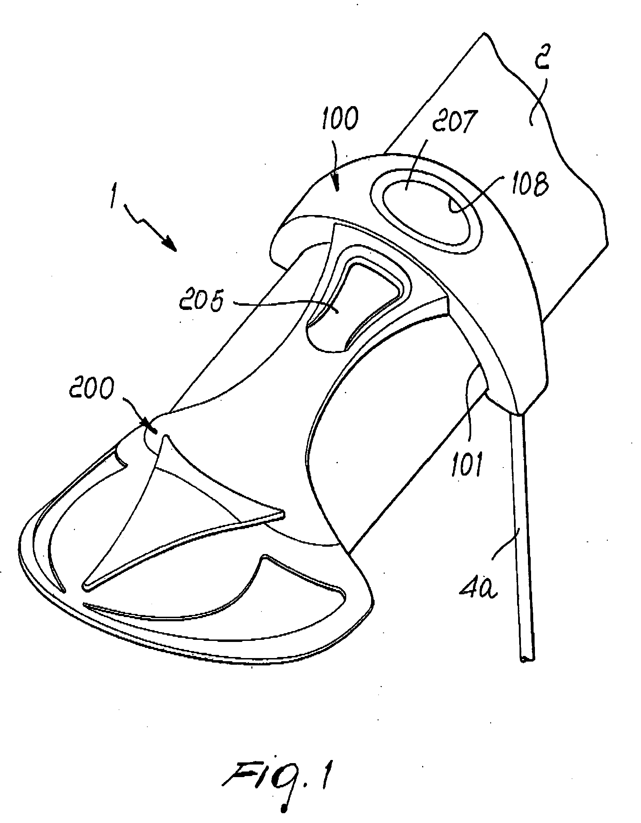

Figure 1 is a perspective view of a safety release for a fender according to the invention, applied to a fender;

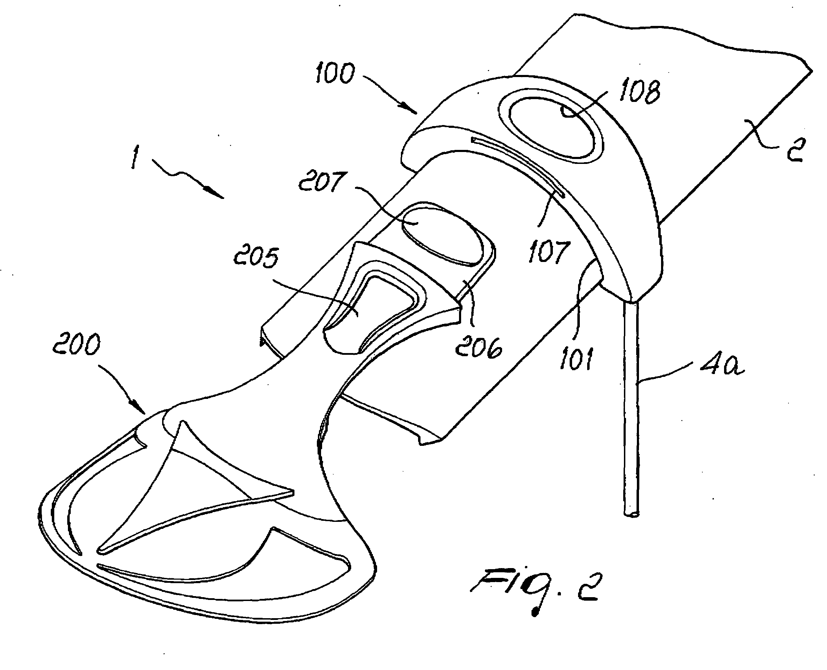

Figure 2 is an exploded perspective view of the safety release according to the invention, applied to a fender;

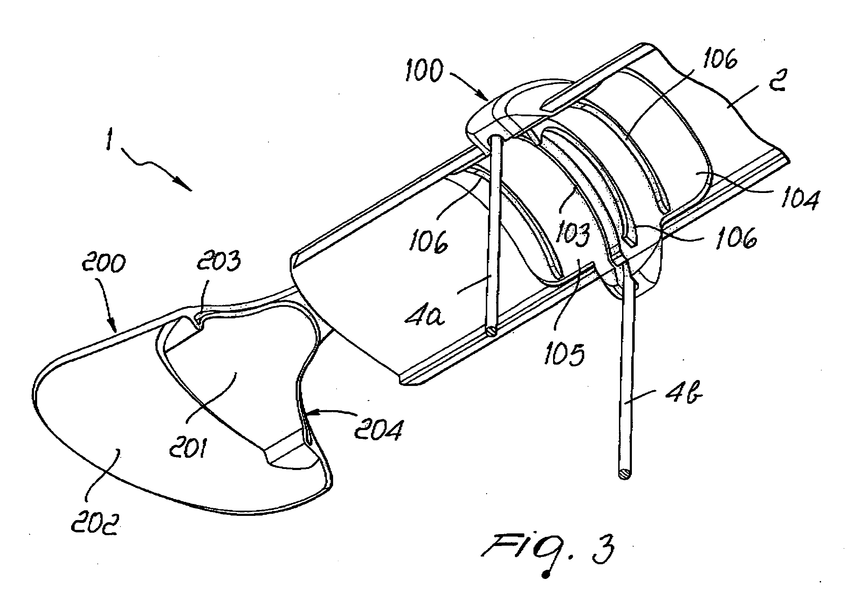

Figure 3 is an exploded bottom perspective view of the safety release applied to a fender;

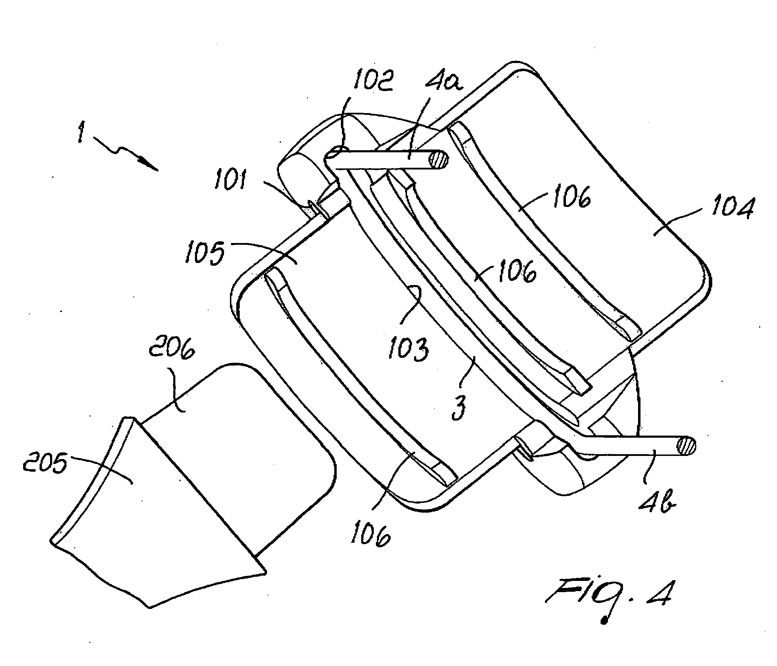

Figure 4 is a perspective detail view of the safety release for a fender;

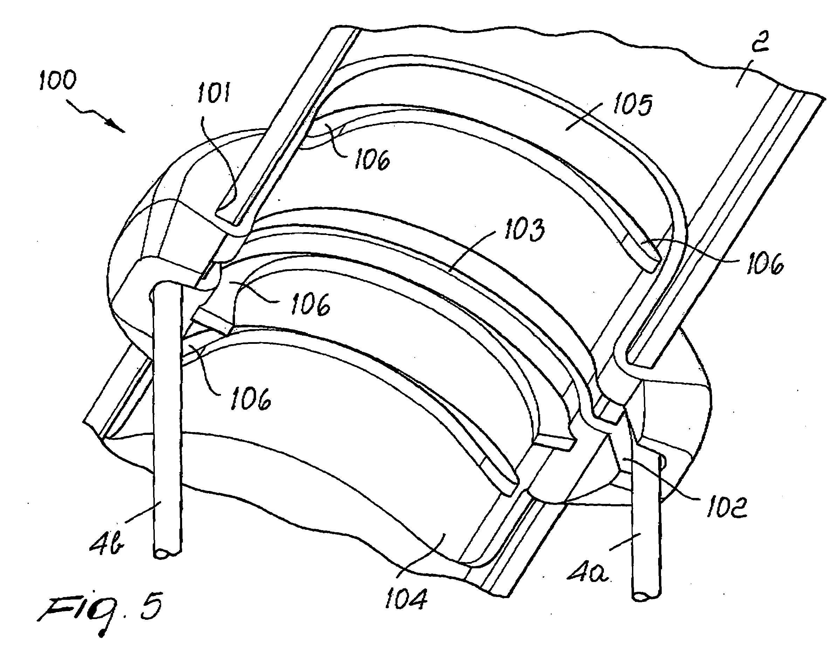

Figure 5 is a detail view of a component of the safety release for a fender.

With reference to the cited figures, the safety release for a fender, generally designated by the reference numeral 1, comprises an engagement member 100 which can be slidingly associated with a fender 2 and on which it is possible to interlock a single rod, which is substantially U-shaped and is constituted by a curved head 3 and by a pair of supporting stems 4a and 4b, which acts as a support for the fender 2.

The engagement member 100, which is preferably made of molded synthetic material, includes a guide 101 which has a transverse cross-section which is substantially complementary to the transverse cross-section of the fender 2, a receptacle 102, which is formed within the guide 101 transversely to the longitudinal central axis of the latter and is shaped so as to accommodate the curved head 3, and a slot 103, which complementarily faces the receptacle 102 with which it is blended.

According to the invention, the safety release 1 comprises a mechanical interference locking means which stops the sliding of the engagement member 100 with respect to the fender 2, after inserting the curved head 3 of the single rod in the receptacle 102 and deforming it, slightly reducing the distance between the two supporting stems 4a and 4b, and allow to join monolithically the engagement member 100 to a mudflap profile 200.

The mechanical interference locking means includes a pair of deformable flaps 104 and 105, which are joined monolithically with the engagement member 100 so as to form both the slot 103 and part of the guide 101 which substantially reproduces the profile of the transverse cross-section of the fender 2 and has, with respect to the latter, a slightly wider radius of curvature, which corresponds to the radius of curvature of the curved head 3.

The deformable flaps 104 and 105 are provided with ribs 106 which have a variable cross-section and progressively become thinner as they approach the longitudinal central axis of the guide 101 in order to give the central region greater deformability.

Whereas in the described embodiment the slot 103 and the receptacle 102 are formed respectively on the inner portion and on the outer portion of the engagement member 100, in order to avoid reducing the gap between the fender 2 and the tire, in a further embodiment, not shown in the accompanying figures, the slot 103 and the receptacle 102 are formed respectively on the outer portion and on the inner portion of the engagement member 100.

As stated in the introduction, the safety release for a fender 1 also includes a mudflap profile 200, which is essentially constituted by a support 201 and a mudflap wing 202, which are joined monolithically and are detachably associable with the fender 2 and with the engagement member 100 so as to form a single body with them.

The support 201 is in practice provided with a blind seat 203, which has a transverse cross-section which is substantially complementary to the transverse cross-section of the fender 2 and allows the sliding insertion of the latter through the inlet 204, and with an extension 205 which has a protrusion 206 which can be associated detachably by interlocking with a recess 107 formed on the engagement member 100.

In practice, the protrusion 206 and the recess 107 can have multiple different configurations and can be detachably associated with each other by simple mechanical interference, caused by the deformation of the engagement member 100 and accordingly by the thinning of the recess 107 caused by the tapering of the single rod, and by using different types of interlocking, which purely by way of example can provide at least one protrusion 207 which can be inserted with a snap movement in a notch 108 formed on the recess 107.

According to a further embodiment, not shown in the accompanying figures, in which the receptacle 102, despite being formed on the outer portion of the engagement member 100, is open so as to allow the insertion therein of the single rod even after inserting the fender 2 in the guide 101, the recess 107 affects the receptacle 102.

As a consequence of this fact, upon insertion of the protrusion 206 in the recess 107, the single rod is also locked, preventing its extraction.

The mudflap wing 202 is joined to the back of the support 201 substantially at the inlet 204, so that the fender 2 can be inserted in the blind seat 203, moving its lower margin beyond the engagement point of the mudflap wing 202 in the support 201.

The engagement point is in fact in practice the fulcrum of any mechanical stresses that act on the mudflap wing 22, and therefore the refinement of moving its arrangement from the lower margin to the back of the fender 2 leads to a reduction of the lever arm of the stresses and consequently to a considerable limitation of the unwanted deformations of the fender 2.

The safety release for fender can also be provided with one or more reflectors or cat eyes, not shown in the accompanying figures, arranged on the engagement member 100 or on the mudflap profile 200.

The operation and use of the safety release for fender according to the invention are described hereinafter.

In order to assemble the fender 2 with the single rod, it is sufficient to insert the curved head 3 of the latter in the receptacle 102, making it pass through the slot 103, slightly and temporarily widen the fender 2 so as to be able to insert it in the guide 101, or in one of the constructive variations first insert the fender 2 in the guide 101 and then insert the single rod until its curved head 3 rests against the receptacle 102, and then plastically deform the single rod, reducing the distance between the two supporting stems 4a and 4b until the fender returns to its original shape.

The tapering of the single rod causes the deformation of the entire engagement member 100 and in particular makes the guide 101 narrower and turns the deformable flaps 104 and 105, which tend to diverge with respect to the slot 103.

As a consequence of this fact, there is mechanical interference between the fender 2 and the engagement member 100, with consequent stopping of relative sliding.

The mudflap profile 200 is fitted before tapering the single rod and in particular the protrusion 206 is inserted by interlocking in the recess 107, optionally engaging by snap action the protrusion 207 with the notch 108, and the fender 2 is inserted in the blind seat 203 through the inlet 204.

The tapering of the single rod also makes the recess 107 narrower, and in this manner the recess interferes mechanically with the protrusion 206, detachably associating the mudflap profile 200 with the engagement member 100.

If the recessed 107 affects the receptacle 102, the insertion of the protrusion 206 also allows to lock the single rod, by pressing on its curved head 3, avoiding its extraction from the engagement member 100.

Although in normal conditions the safety release for fender 1 is engaged with the fender 2 stably, any forces which might accidentally act on the supporting stems 4a and 4b would cause the disengagement of the mudflap profile 200 from the engagement member 100 and its sliding on the fender 2, so as to avoid sudden jamming of the wheel and ensure the safety of the user.

In practice it has been found that the safety release for fender according to the invention fully achieves the intended aim, since it can be installed on any type of fender and above all without performing any prior work yet ensures maximum safety for the user.

Furthermore, the safety release for fender is simple and cheap to provide, and at the same time combines also the function of a mudflap with its main function.

This application claims the priority of Italian Patent Application No. VI2007A000179, filed on June 21, 2007, the subject matter of which is incorporated herein by reference.

## Claims

1. A safety release for a fender, comprising an engagement member which can be slidingly associated with a fender and can be associated by interlocking with a single rod, said engagement member comprising a guide with a transverse cross-section which is substantially complementary to the transverse cross-section of said fender, **characterized in that** it comprises a mechanical interference locking means which is suitable to stop the sliding of said engagement member with respect to said fender and to detachably join said engagement member to a mudflap profile to form a single body, as a consequence of the deformation of said single rod.

2. The safety release for fender according to the preceding claim, **characterized in that** said mechanical interference locking means comprises at least one deformable flap which is joined monolithically with said engagement member and forms at least partly said guide, said deformable flap reducing the thickness of the transverse cross-section of said guide to interfere with said fender as a consequence of a tapering of said single rod.

3. The safety release for fender according to one or more of the preceding claims, **characterized in that** said deformable flap comprises a plurality of ribs with a variable cross-section, the transverse cross-section of said ribs becoming narrower substantially at their central portion.

4. The safety release for fender according to one or more of the preceding claims, **characterized in that** said engagement member comprises at least one receptacle which is suitable to accommodate the curved head of said single rod, said single rod being substantially U-shaped and being constituted by a pair of supporting stems which are joined monolithically to said curved head.

5. The safety release for fender according to one or more of the preceding claims, **characterized in that** it comprises a mudflap profile which is constituted by a support and by a mudflap wing which are joined monolithically, said mudflap profile being associable detachably with said engagement member and with said fender.

6. The safety release for fender according to one or more of the preceding claims, **characterized in that** said support comprises a blind seat with a transverse cross-section which is substantially complementary to the transverse cross-section of said fender, said support are being associable slidingly with said fender through the inlet of said blind seat.

7. The safety release for fender according to one or more of the preceding claims, **characterized in that** said support comprises an extension provided with a protrusion which can be associated detachably by interlocking with a recess formed on said engagement member.

8. The safety release for fender according to one or more of the preceding claims, **characterized in that** said protrusion can be associated with said recess by mechanical interference, the transverse cross-section of said recess becoming narrower to interfere with said protrusion as a consequence of a tapering of said single rod.

9. The safety release for fender according to one or more of the preceding claims, **characterized in that** said protrusion comprises at least one raised portion which can be inserted in a notch which is formed on said recess, said protrusion being associable with said recess with a snap movement.

10. The safety release for fender according to one or more of the preceding claims, **characterized in that** said recess affects said receptacle to allow said protrusion to lock said single rod, said receptacle being open to allow the insertion of said single rod after associating said engagement member with said fender.

11. The safety release for fender according to one or more of the preceding claims, **characterized** that said mudflap wing is joined to the back of said support substantially at said inlet of said blind seat in order to reduce the lever arm of the stresses that act on said mudflap wing.
